# EUROPÄISCHE PATENTANMELDUNG

(11) **EP 0 808 042 A2**
(43) Veröffentlichungstag der Anmeldung: **19.11.1997**
(21) Anmeldenummer: 97107387.9
(22) Anmeldetag: 05.05.1997
(51) Int. Cl.: H04K 1/00

(54) **Automatische Adaption eines Schlüsselgerätes an ein Telefon**

(30) Priorität: 13.05.1996 DE 19619298
(71) Anmelder: SIEMENS AKTIENGESELLSCHAFT, 80333 München (DE)
(72) Erfinder: Jahnen, Georg, Dr., 85716 Unterschleissheim (DE); Seddick, Peter, 85716 Unterschleissheim (DE)

(57) **Zusammenfassung**

Die Erfindung betrifft ein Verfahren zur automatischen Anpassung eines Schlüsselgerätes, insbesondere eines Sprachschlüsselgerätes, an ein Kommunikationsendgerät, bei dem das Endgerät mindestens ein Mikrofon (MK) aufweist, bei dem die Impedanz des Mikrofons (MK) gemessen wird, und bei dem die Verstärkung der über das Mikrofon (MK) aufgenommenen Sprachsignale in Abhängigkeit von der Impedanz des Mikrofons (MK) eingestellt wird.

## Beschreibung

Die Erfindung betrifft ein Verfahren zur automatischen Anpassung eines Schlüsselgerätes, insbesondere eines Sprachschlüsselgerätes, an ein Kommunikationsendgerät.

Solche Sprachschlüsselgeräte dienen zu Ver- und Entschlüsselung der Tonfrequenzsignale in einem Endgerät der Kommunikationstechnik, beispielsweise in einem Telefonapparat. Im Telefonapparat ist im Handapparat, oder beim Komforttelefon mit Freisprecheinrichtung zusätzlich im Gehäuse, ein Mikrofon zur Aufnahme der Tonfrequenzsignale angeordnet. Als Mikrofone kommen dynamische Mikrofone mit unterschiedlichen Impedanzen oder Elektret-Mikrofone zum Einsatz.

Der Erfindung liegt die Aufgabe zugrunde ein Verfahren anzugeben, durch daß die Verstärkung und/oder die Stromversorgung für das Mikrofon des Kommunikationsendgerätes automatisch an das Schlüsselgerät angepaßt wird.

Diese Aufgabe wird erfindungsgemäß durch die im Patentanspruch 1 beziehungsweise 3 angegebenen Merkmale gelöst.

Im folgenden wird die Erfindung anhand eines in der Zeichnung dargestellten Ausführungsbeispieles beschrieben. Dabei zeigen:
Figur 1 die Konfiguration eines Telefonendgerätes mit einem Schlüsselgerät, und
Figur 2 das Blockschaltbild einer Schaltungsanordnung zur Durchführung des erfindungsgemäßen Verfahrens.

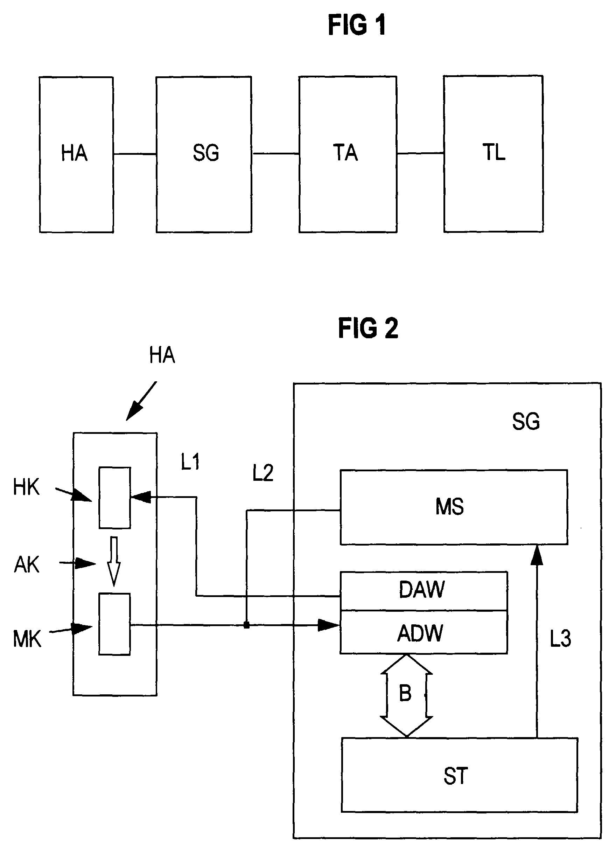

In der Figur 1 ist ein Telefonapparat TA dargestellt, der an einer Teilnehmeranschlußleitung TL angeschaltet ist. Der Telefonapparat TA kann ein analoges oder digitales Telefon sein, und die Teilnehmeranschlußleitung kann eine a/b-Leitung oder eine digitale Anschlußleitung, beispielsweise eine ISDN-Anschlußleitung sein. Mit dem Telefonapparat TA ist über ein Schlüsselgerät SG ein Handapparat HA verbunden.

Weitere Einzelheiten sind in der Figur 2 dargestellt.

Der Handapparat HA enthält in an sich bekannter Weise eine Hörkapsel HK und ein Mikrofon MK. Zwischen der Hörkapsel HK und dem Mikrofon MK existiert aufgrund der Anordnung in einem einzigen Gehäuse eine akustische Kopplung AK, die symbolisch durch einen Pfeil dargestellt ist.

Der Handapparat HA ist mit dem Schlüsselgerät SG verbunden, wobei im Schlüsselgerät SG selbst nur die für die Erfindung notwendigen Schaltungsblöcke dargestellt sind. Die Ver- und Entschlüsselung selbst sind für das erfindungsgemäße Verfahren von untergeordneter Bedeutung.

Das Schlüsselgerät SG weist eine steuerbare Mikrofonspeisung MS, einen Analog/Digital-Wandler ADW und einen Digital/Analog-Wandler DAW, eine Steuerung ST und einen Bus B auf. Über den Bus B werden die beiden Wandler ADW und DAW von der Steuerung ST angesteuert. Die Steuerung ST ist über eine Leitung L3 mit der Mikrofonspeisung MS verbunden.

Die Mikrofonspeisung MS ist über eine Leitung L2 mit dem Mikrofon MK im Handapparat HA und mit dem Analog/Digital-Wandler ADW des Schlüsselgerätes SG verbunden. Der Digital/Analog -Wandler DAW ist über eine Leitung L1 mit der Hörkapsel HK verbunden.

Die in Figur 2 dargestellte Schaltung dient zur erfindungsgemäßen Messung der Parameter des Mikrofons MK. Die Parameter des Mikrofons MK sind insbesondere die Impedanz, und beim Elektret-Mikrofon die richtige Polung der Speisespannung.

Bei dem erfindungsgemäßen Verfahren wird in einem ersten Schritt die Impedanz des Mikrofons MK ermittelt.

Von der Steuerung ST wird über die Leitung L3 ein Taktsignal an die Mikrofonspeisung MS gegeben. Die von der Mikrofonspeisung MS über die Leitung L2 an das Mikrofon MK abgegebene Speisespannung ändert daraufhin ihre Polarität im Rhythmus des Taktsignals. An den Anschlußpunkten des Mikrofons MK entsteht dadurch eine von der Impedanz des Mikrofons MK in der Amplitude abhängiges Signal. Dieses wird im Analog/Digital - Wandler ADW digitalisiert und über den Bus B an die Steuerung ST gegeben. Wird von der Steuerung ST eine niedrige Impedanz erkannt, so handelt es sich um ein dynamisches Mikrofon MK. Die Speisespannung wird daraufhin während des normalen Sprechbetriebes abgeschaltet, und die über das Mikrofon MK aufgenommenen Tonfrequenzsignale werden entsprechend der Impedanz verstärkt.

Wird von der Steuerung ST eine hohe Impedanz des Mikrofons MK erkannt, so handelt es sich um ein Elektret-Mikrofon.

In einem zweiten Schritt kann dann die richtige Polung der Speisespannung ermittelt werden.

Die Steuerung ST sendet hierzu über den Digital/Analog-Wandler DAW einen Ton im Hörfrequenzbereich an die Hörkapsel HK des Handapparates HA. Durch den akustischen Nebenschluß AK im Handapparat HA empfängt das Mikrofon MK das akustische Signal. Bei einer richtigen Polung der von der Mikrofonspeisung MS abgegebenen Speisespannung liefert das Mikrofon MK ein entsprechendes elektrisches Signal an den Analog/Digital-Wandler ADW. Dies geschieht nur bei einer mit der richtigen Polarität angelegten Speisespannung. Wenn der Analog/Digital-Wandler ADW kein Signal empfängt, so wird von der Mikrofonspeisung MS aufgrund eines entsprechendes Steuersignals der Steuerung ST die Polarität der Speisespannung vertauscht. Der Messvorgang läuft dann mit dieser Polarität der Speisespannung erneut ab.

## Patentansprüche

1. Verfahren zur automatischen Anpassung eines Schlüsselgerätes, insbesondere eines Sprachschlüsselgerätes, an ein Kommunikationsendgerät,
bei dem das Endgerät mindestens ein Mikrofon (MK) aufweist, bei dem die Impedanz des Mikrofons (MK) gemessen wird, und bei dem die Verstärkung der über das Mikrofon (MK) aufgenommenen Sprachsignale in Abhängigkeit von der Impedanz des Mikrofons (MK) eingestellt wird.

2. Verfahren nach Anspruch 1,
bei dem zur Messung der Impedanz des Mikrofons (MK) eine getaktete Speisespannung mit wechselnder Polarität an das Mikrofon (MK) angelegt wird.

3. Verfahren zur automatischen Anpassung eines Schlüsselgerätes, insbesondere eines Sprachschlüsselgerätes, an ein Kommunikationsendgerät,
bei dem eine Tonfrequenz an eine in der Nachbarschaft des Mikrofons (MK) angeordnete Hörkapsel (HK) angelegt wird, und bei dem durch einen im Mikrofon (MK) empfangenen Ton die richtige Polung einer am Mikrofon (MK) anliegenden Speisespannung ermittelt wird.
